# EUROPÄISCHE PATENTSCHRIFT

(11) **EP 2 993 306 B1**
(45) Veröffentlichungstag und Bekanntmachung des Hinweises auf die Patenterteilung: **29.04.2020**
(21) Anmeldenummer: 15183756.4
(22) Anmeldetag: 03.09.2015
(51) Int. Cl.: F01D 9/06, F01D 25/16, F02C 7/12

(54) **FLUGZEUGTRIEBWERK MIT LUFTLEITVORRICHTUNG**
AIRCRAFT ENGINE HAVING AIR DIRECTING DEVICE
TURBOREACTEUR DOTE D'UN DISPOSITIF DEFLECTEUR D'AIR

(30) Priorität: 05.09.2014 DE 102014217835
(43) Veröffentlichungstag der Anmeldung: 09.03.2016
(73) Patentinhaber: Rolls-Royce Deutschland Ltd & Co KG, 15827 Blankenfelde-Mahlow (DE)
(72) Erfinder: THIES, Robert, 15827 Blankenfelde-Mahlow (DE)
(74) Vertreter: Maikowski & Ninnemann Patentanwälte Partnerschaft mbB

(56) Entgegenhaltungen:
- EP-A1- 2 857 666
- EP-A1- 2 860 412
- EP-A2- 1 148 221
- GB-A- 695 482
- US-A- 5 729 969
- US-A1- 2010 150 700

## Beschreibung

Die Erfindung betrifft ein Flugzeugtriebwerk mit einer Luftleitvorrichtung mit den Merkmalen des Anspruchs 1.

In Flugzeugtriebwerken werden aus thermischen Effizienzgründen immer höhere Temperaturen angestrebt. Dies führt dazu, dass viele Bereiche, wie z.B. die Wandungen von Turbinen oder Kompressoren erhöhten thermischen Belastungen ausgesetzt sind.

Ein Flugzeugtriebwerk mit einer Luftleitvorrichtung ist beispielsweise aus der US 2010/150700 A1, der EP 1 148 221 A2 und der US 5 729 969 A bekannt.

Es besteht daher die Aufgabe, Vorrichtungen für eine möglichst effiziente Verteilung der Luft im Inneren eines Kerntriebwerkgehäuses, insbesondere zur Kühlung thermisch belasteter Teile im Flugzeugtriebwerk zu schaffen.

Diese Aufgabe wird durch ein Flugzeugtriebwerk mit einer Luftleitvorrichtung mit den Merkmalen des Anspruchs 1 gelöst.

Dabei ist im Bereich einer Verbindungsvorrichtung zwischen dem Kerntriebwerkgehäuse und einer äußeren Wandung eines Nebenstromkanals des Flugzeugtriebwerkes mindestens eine mit der Verbindungvorrichtung verbundene oder in ihr angeordnete erste Lufteinlassöffnung vorgesehen. Mindestens eine Abdichtungsbarriere dient zur Trennung der durch die mindestens eine erste Lufteinlassöffnung eingetretenen Luft von anderen Bereichen des Kerntriebwerkgehäuses. Die Verbindungsvorrichtung dient somit nicht nur der mechanische Anbindung des Kerntriebwerkes, das von dem Kerntriebwerkgehäuse umhüllt wird, sondern die Verbindungsvorrichtung weist mit der mindestens einen ersten Lufteinlassöffnung gleichzeitig z.B. Mittel zur thermischen Kontrolle von Bereichen im Kerntriebwerk auf. Unabhängig von der thermischen Kontrolle kann die eintretende Luft auch für andere Zwecke im Flugzeugtriebwerk verwendet werden.

Die mindestens eine Verbindungsvorrichtung ist als Strebe ausgebildet. Diese länglichen, vergleichsweise schmalen Bauelemente setzen der Strömung im Nebenstromkanal wenig Widerstand entgegen. Dabei kann die Strebe radial oder tangential zum Kerntriebwerkgehäuse angeordnet sein.

Die mindestens eine erste Lufteinlassöffnung ist in einem Gehäuse an dem Kerntriebwerkgehäuse angeordnet, wobei das Gehäuse eine Ausbuchtung des Kerntriebwerkgehäuses ist. Damit kann das Gehäuse, das ohnehin für die Befestigung der Verbindungsstreben verwendet wird auch für die thermische Kontrolle des Flugzeugtriebwerkes verwendet werden.

In einer Ausführungsform dient die mindestens eine erste Lufteinlassöffnung für einströmende Luft zur Kühlung mindestens eines Bereichs einer Wandung einer Turbine, eines Teils der mindestens einen Verbindungsvorrichtung, einer elektrischen Vorrichtung und / oder eines Lagergehäuses.

Zusätzlich oder alternativ kann die Lufteinlassvorrichtung ein Mittel zum Aufbau eines Gegendruckes mittels der einströmenden Luft im Inneren des Flugzeugtriebwerks, insbesondere im Raumbereich von Lagern der Turbine und / oder des Kompressors aufweisen. So wird ein Gegendruck z.B. in Lagerkammern von Wellen mit Öleinspritzung verwendet, damit das Öl im Lagergehäuse verbleibt. Die eintretende Luft dient hier primär dem Druckaufbau im Lagergehäuse. Auch kann eine Ausführungsform ein Mittel zum Aufbau eines Gegendruckes im Raumbereich um die zu kühlende Wandung, insbesondere die Wandung der Turbine aufweisen.

Insbesondere weist die mindestens eine Abdichtungsbarriere ein elastisches Band, eine elastische Membran und / oder einen Faltenbalg auf. Auch kann die Abdichtungsbarriere als umlaufender Ring ausgebildet sein, um eine Trennung der durch die mindestens eine erste Lufteinlassöffnung eingetretenen Luft von anderen Bereichen des Kerntriebwerkgehäuses zu schaffen.

Des Weiteren kann von der mindestens einen ersten Lufteinlassöffnung stromaufwärts im Nebenstromkanal mindestens eine zweite Lufteinlassöffnung angeordnet sein. Damit können andere Bereiche, wie z.B. eine Wandung des Kompressors gekühlt werden. Dabei ist es nicht zwingend, dass die mindestens eine zweite Lufteinlassöffnung an einer Verbindungsvorrichtung angeordnet ist.

Ferner kann in einer Ausführungsform die Luftführung der einströmenden Luft durch die mindestens eine erste und / oder zweite Lufteinlassöffnung zur Unterdrückung einer Luftströmung aus einem inneren Bereich des Flugzeugtriebwerks in den Nebenstromkanal eingesetzt werden.

Wenn eine Leitvorrichtung zur Führung eines Luftstroms im Kerntriebwerkgehäuse und / oder Gehäuse vorgesehen ist, so können unterschiedliche Luftströme gezielt zu einem Ort geleitet werden oder Luftströme gezielt miteinander gemischt werden, um z.B. einen aerodynamischen Abdichtungseffekt zu erreichen.

Es ist möglich, dass mindestens eine weitere Lufteinlassvorrichtung außerhalb einer Verbindungsvorrichtung vorgesehen ist, so dass die Luft, insbesondere Kühlluft oder Gegendruckluft im Inneren des Kerntriebwerkgehäuses aus unterschiedlichen Quellen gespeist werden kann.

Ausführungsformen werden beispielhaft im Zusammenhang mit den Zeichnungen beschrieben. Dabei zeigen
- Fig. 1: eine schematische Darstellung einer Ausführungsform in einer Schnittansicht durch einen Teil eines Flugzeugtriebwerkes;
- Fig. 2A: eine perspektivische Ansicht eines Details einer aus dem Stand der Technik bekannten Verbindung eines Kerntriebwerkgehäuses mit einem Mantelgehäuse des Flugzeugtriebwerkes mit einer Verbindungsvorrichtung;
- Fig. 2B: eine Ausführungsform einer Luftleitvorrichtung mit zwei ersten Lufteinlassöffnungen im Bereich der Verbindungsvorrichtung;
- Fig. 2C: eine perspektivische Darstellung einer Ausführungsform mit zwei ersten Lufteinlassöffnungen;
- Fig. 3: eine Schnittansicht durch das Kerntriebwerkgehäuse mit einer Ausführungsform einer Luftleitvorrichtung;
- Fig. 4: eine Schnittansicht analog zu Fig. 3 mit einer weiteren Ausführungsform der Luftleitvorrichtung;
- Fig. 5: eine schematische Schnittansicht durch eine Ausführungsform mit einem Mittel zu Luftleitung in das Kerntriebwerk;
- Fig. 6: eine schematische Schnittansicht im Bereich der ersten Lufteinlassöffnung und einer Abtrennung des luftgefüllten Bereichs von anderen Teilen des Kerntriebwerkgehäuses;
- Fig. 7: eine schematische Schnittansicht im Bereich der ersten Lufteinlassöffnung mit einer Vorrichtung zur Schaffung einer aerodynamischen Abdichtung.

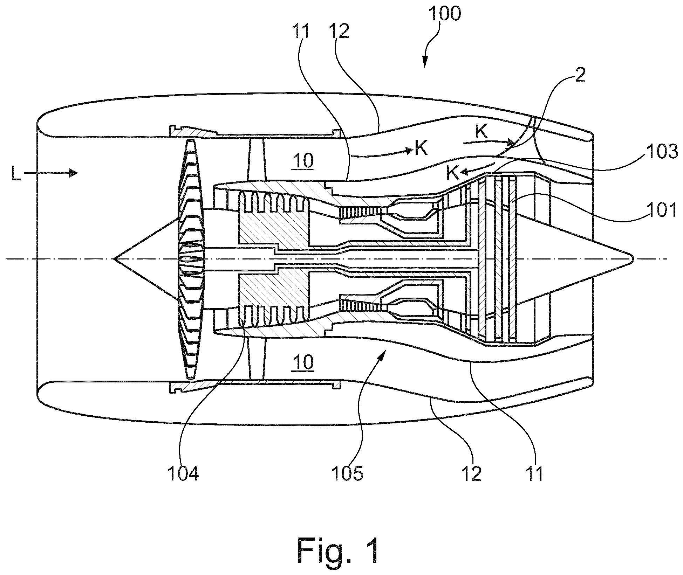

Fig. 1 zeigt in einer Schnittansicht schematisch ein Flugzeugtriebwerk 100, das einen mehrstufigen Kompressor 104 (Fan, Mitteldruck- und Hochdruckkompressor) und eine mehrstufige Turbine 101 (Hochdruck-, Mitteldruck-, Niederdruckturbine) im Kerntriebwerk 105 aufweist

Eine solche Turbinen und Kompressor-Konfiguration ist für ein Dreiwellentriebwerk 100 typisch. Bei einem Einwellentriebwerk oder einem Zweiwellentriebwerk kommen entsprechend weniger Stufen zum Einsatz. Auch für diese Triebwerksformen sind die im Folgenden beschriebenen Ausführungsformen der Luftleitvorrichtungen anwendbar.

Die in das Flugzeugtriebwerk 100 einströmende Luft L wird zum großen Teil durch einen Nebenstromkanal 10 geführt. Dabei wird ein Kerntriebwerkgehäuse 11 durch eine erste Verbindungsvorrichtung 2 (hier nur eine von mehreren am Umfang verteilten Verbindungsvorrichtungen 2 dargestellt) mit einem Mantelgehäuse 13 verbunden. Der Nebenstromkanal 10 wird radial außen von einer äußeren Wandung 12 (d.h. der Innenfläche des Mantelgehäuses 13) und radial innen von einer inneren Wandung begrenzt; d.h. die innere Wandung ist das Kerntriebwerkgehäuse 11.

Dabei weist - wie im Folgenden noch beschrieben wird - mindestens eine erste Verbindungsvorrichtung 2 eine erste Lufteinlassöffnung 1 auf, um Luft K vom Nebenstromkanal 10 in das Innere des Kerntriebwerkgehäuses 11 zu fördern. In der Regel sind mehrere Verbindungsvorrichtungen 2 vorgesehen, wobei die erste Lufteinlassöffnung 1 für Luft K mindestens in einer der Verbindungsvorrichtungen 2 angeordnet ist.

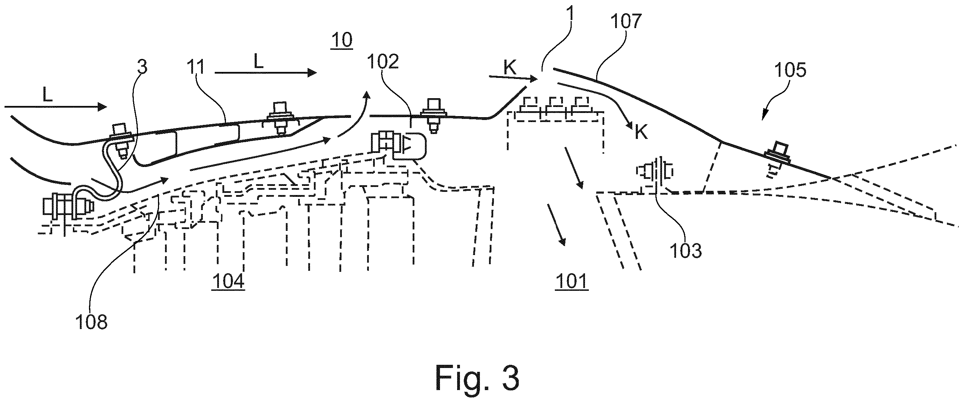

Im Folgenden wird eine Ausführungsform einer Luftleitvorrichtung beschrieben, mit der Bereiche einer Wandung 103 der mehrstufigen Turbine 101 gekühlt werden (siehe Fig. 3). Diese Luftleitvorrichtung kann grundsätzlich auch in unterschiedlichen Bauarten von Flugzeugtriebwerken 100 verwendet werden und ist nicht auf die in den Figuren dargestellten Typen beschränkt.

Die erste Lufteinlassöffnung 1 ist hier im Bereich der ersten Verbindungsvorrichtung 2 angeordnet, die im Bereich der Turbine 101 angeordnet ist. Zusätzlich kann auch eine zweite Verbindungsvorrichtung 4 mit einer zweiten Lufteinlassöffnung 3 im vorderen Bereich des Flugzeugtriebwerkes 100 angeordnet sein. Die zweite Lufteinlassöffnung 3 kann ebenfalls in dem Kerntriebwerkgehäuse 11 angeordnet sein.

Auch ist es möglich, die erste Verbindungsvorrichtung 2 mit der ersten Lufteinlassöffnung 1 im vorderen Bereich des Flugtriebwerkes 100 angeordnet ist.

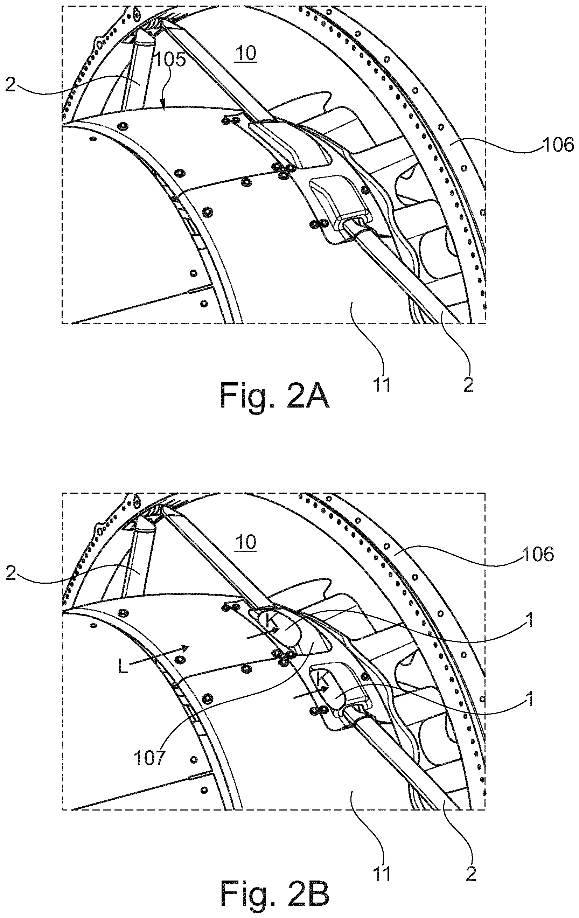

In Fig. 2A sind in einer perspektivischen Ansicht Details einer aus dem Stand der Technik bekannten Verbindung des Kerntriebwerkgehäuse 11 mit einem Mantelgehäuse 13 des Flugzeugtriebwerkes 100 durch eine Verbindungsvorrichtung 2 dargestellt. Dabei weist die Verbindungsvorrichtung 2 zwei Streben auf, die mit einem Befestigungsring 106 verbunden sind. Der Befestigungsring 106 ist an der hier nicht dargestellten äußeren Wandung 12 angeordnet. Auf der abgewandten Seite des Kerntriebwerkes 105 ist mindestens eine weitere Verbindungsvorrichtung 2 angeordnet, das über mit der hier sichtbare Strebe mit dem Befestigungsring 106 verbunden ist. Die Streben der Verbindungsvorrichtung 2 verlaufen durch den Nebenstromkanal 10.

Die Verbindungsvorrichtung 2 ist mit dem Kerntriebwerkgehäuse 11 verbunden, wobei im Verbindungsbereich des Kerntriebwerkgehäuses 11 Auswölbungen - d.h. eine Art Gehäuse 16 - für die hier nicht dargestellte Verbindungsvorrichtung 2 aufweist.

Die - im Vergleich zur Strömung im Kerntriebwerk 105 - kühle Luftströmung im Nebenstromkanal 10 umströmt die Verbindungsvorrichtung 2.

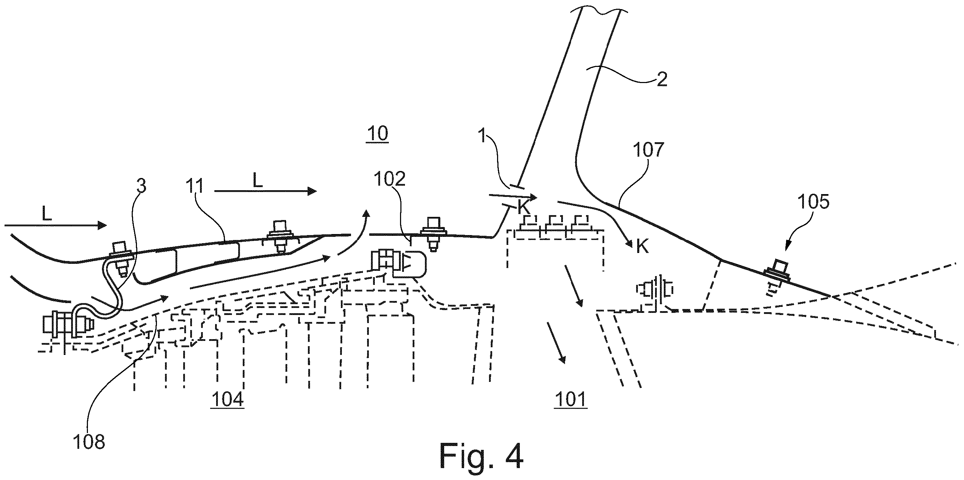

In Fig. 2B ist eine Ausführungsform der Luftleitvorrichtung dargestellt, bei der im Fußbereich der Streben der Verbindungsvorrichtung 2 am Kerntriebwerkgehäuse 11 zwei erste Lufteinlassöffnungen 1 für die Luft K vorgesehen sind. Die Luftströmung L im Nebenstromkanal 10 trifft auf die beiden ersten Lufteinlassöffnungen 1 und wird durch diese ins Innere des Kerntriebwerkgehäuses 11 geleitet (siehe z.B. Fig. 3 und 4). Damit wird ein Teil der Luftströmung L aus dem Nebenkanalstrom 10 abgezapft.

In dieser Ausführungsform sind die ersten Lufteinlassöffnungen 1 in einer Art Gehäuse 16 integriert, das durch die Ausbuchtung des Kerntriebwerkgehäuses 11 gebildet wird. Zusätzlich können die ersten Lufteinlassöffnungen 1 auch in Streben der Verbindungsvorrichtung 2 angeordnet sein (siehe Fig. 4). Die Luft K wird dann durch das Innere der Streben in das Kerntriebwerk 105 gefördert; die Streben bilden dann das Gehäuse 16 für die ersten Lufteinlassöffnungen 1.

Somit ist im Bereich der Verbindungsvorrichtung 2 zwischen dem Kerntriebwerkgehäuse 11 und der äußeren Wandung 12 (in Fig. 2B nicht dargestellt) des Nebenstromkanals 10 eine mit der Verbindungsvorrichtung 2 verbundene erste Lufteinlassöffnung 1 angeordnet.

Grundsätzlich gibt es verschiedene Möglichkeiten, das Kerntriebwerkgehäuse 11 mit der äußeren Wandung 12 zu verbinden, so dass die Verwendung der hier dargestellten Streben der Verbindungsvorrichtung 2 nicht als einschränkend zu verstehen ist.

Fig. 2B zeigt Streben, die im Wesentlichen tangential zum Kerntriebwerkgehäuse 11 angeordnet sind. Alternativ oder zusätzlich können die Streben auch radial auf dem Kerntriebwerkgehäuse 11 angeordnet sein (siehe Fig. 4).

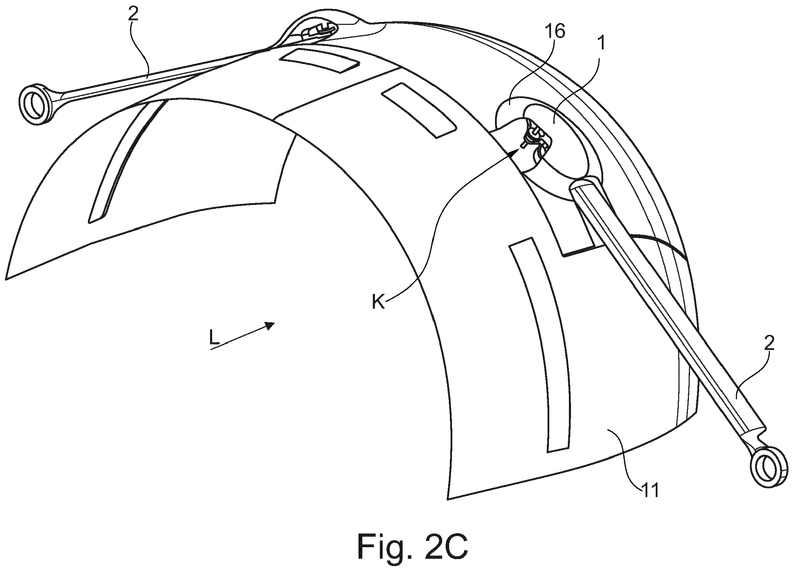

Der Eintritt der Luft K In das Kerntriebwerksgehäuse 11 ist in der perspektivischen Darstellung der Fig. 2C erkennbar. Das Gehäuse 16 für die Verbindungsvorrichtung 2 am Kerntriebwerksgehäuse 2 stellt eine Art Auswölbung des Kerntriebwerksgehäuses dar, d.h. es kann einstückig mit diesem ausgebildet sein. In diese Gehäuse 16 für die Verbindungsvorrichtung 2 ist die erste Lufteinlassöffnung 1 angeordnet, so dass die eintretende Luft K über das Gehäuse 16 in das Kerntriebwerk eintreten kann.

In Fig. 3 ist eine Schnittansicht durch das Kerntriebwerkgehäuse 11 dargestellt, wobei das Kerntriebwerk von einer Wandung 103 umgeben ist. Dabei sind die Details der Turbine 101 und eines hinteren Turbinengehäuses 107 hier aus Gründen der Einfachheit nicht detailliert dargestellt. In der Fig. 3 wir die axiale Erstreckung der Turbine 101 und des hinteren Turbinengehäuses angegeben.

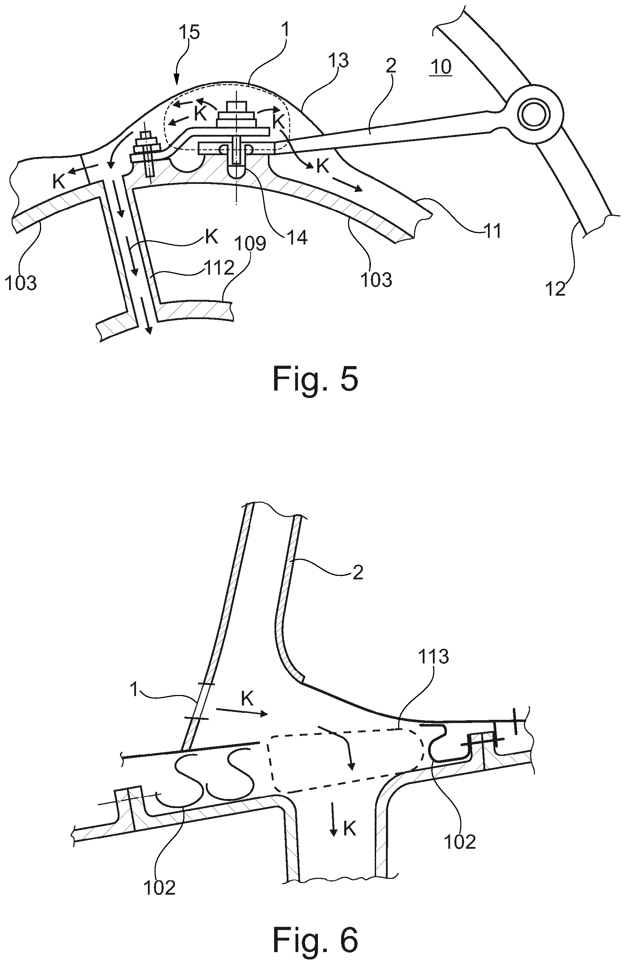

Die Luftströmung L im Nebenstromkanal 10 verläuft in Fig. 3 von links nach rechts. Im hinteren Bereich, im Bereich des hinteren Turbinengehäuses 107 ist im Gehäuse 16 einer Verbindungsvorrichtung 2 (hier auf Grund der tangentialen Anordnung gemäß Fig. 2B nicht sichtbar) eine erste Lufteinlassöffnung 1 dargestellt, durch die Luft K in das Innere des Kerntriebwerkgehäuses 11 gelangt, um z.B. zur Druckerhöhung in einem Lagergehäuse zu dienen (siehe Fig. 5).

Stromaufwärts ist der Kompressor 104 angeordnet, dessen Kompressorwandung 108 ebenfalls mit Luft K gekühlt wird. Dazu wird ein Luftstrom K, der ebenfalls aus dem Nebenstromkanal 10 stammt in das Innere des Kerntriebwerkgehäuses 11 geführt, wobei der Luftstrom K anschließend wieder in den Nebenluftkanal 10 geführt wird.

Für die Kühlung im vorderen Bereich des Flugzeugtriebwerkes 100 weist das Kerntriebwerkgehäuse 11 eine zweite Lufteinlassöffnung 3 auf, die in Fig. 1 dargestellt ist.

Die Beaufschlagung dieses Bereiches mit Luft K kann durch eine in üblicher Weise ausgebildete zweite Lufteinlassöffnung 3 erfolgen, oder über eine zweite Lufteinlassöffnung 3, die in einer zweiten Verbindungsvorrichtung 4 angeordnet ist (siehe Fig. 1).

In Fig. 4 ist in Ergänzung der Ausführungsform der Fig. 3 - auf deren Beschreibung Bezug genommen werden kann - eine weitere Ausführungsform dargestellt, bei der die Strebe 2 der Verbindungsvorrichtung radial zum Kerntriebwerkgehäuse 11 angeordnet ist.

Des Weiteren ist hier in schematischer Weise eine weitere Anwendung dargestellt, die auch in Kombination mit anderen Ausführungsformen eingesetzt werden kann.

In Flugzeugtriebwerken 100 werden Wellen (hier nicht dargestellt) mit Lagern 111 gelagert. Die Lager 111 werden z.B. von Lagergehäusen 109 umgeben. Zur Schmierung der Lager 111 ist eine Öleinspritzung 110 vorgesehen. Hierbei besteht die Aufgabe, dass das Öl im Lagergehäuse 109 gehalten werden muss, gerade weil auch das Lagergehäuse 109 Öffnungen aufweist, durch die das Öl austreten kann.

In der dargestellten Ausführungsform wird die eintretende Luft K nicht primär zur Kühlung verwendet, sondern zum Aufbau eines Gegendrucks für das Öl in dem Lagergehäuse 109. Dies ist in Fig. 4 durch die beiden Pfeile K angedeutet, die die Luft K von außen an das Lagergehäuse 109 führen und dort den Druck erhöht. Auch kann damit keine heiße Luft aus der Turbine 101 entweichen.

In Fig. 5 ist eine Schnittansicht quer zur Längsachse des Flugzeugtriebwerks 100 durch das Kerntriebwerkgehäuse 11 und den Nebenstromkanal 10 dargestellt. Die erste Verbindungsvorrichtung 2 ist als Strebe ausgebildet und verbindet das Kerntriebwerkgehäuse 11 mit der hier nicht dargestellten äußeren Wandung 12. An dem Kerntriebwerkgehäuse 11 ist das Gehäuse 16 der ersten Verbindungsvorrichtung 2 angeordnet, in dem die erste Lufteinlassöffnung 1 angeordnet ist (hier als gestrichelte Linie dargestellt).

Damit ist die erste Lufteinlassöffnung 1 mit der Verbindungsvorrichtung 2 verbunden. Die erste Verbindungsvorrichtung 2 ist über eine Schraubenverbindung 14 im Inneren des Gehäuses 16 mit dem Kerntriebwerkgehäuse 11 verbunden.

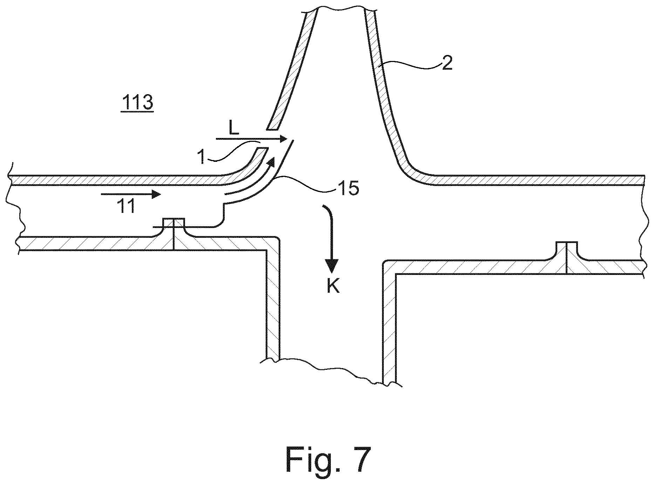

Im Inneren des Gehäuses 16 sind Leitvorrichtungen 15 (siehe z.B. Fig. 7) für die Luft K angeordnet.

Diese sorgen dafür, dass die Luft K zum einen zu Kühlzwecken - wie z.B. in Fig. 3 beschrieben - verwendet wird. Alternativ kann auch eine Scheibenkühlung der Turbine 101 erfolgen.

Zum anderen wird die Luft K auch dazu verwendet, einen Gegendruck in dem Lagergehäuse 109 (siehe Fig. 4) aufzubauen. Dazu wird die Luft K hier durch eine hohl ausgebildete Strebe im Innern des Kerntriebwerks 105 geführt. Alternativ kann auch ein Gegendruck in einem Scheibengehäuse der Turbine 101 ausgebaut werden.

In Fig. 6 ist in einer Schnittansicht eine Ausführungsform dargestellt, bei der eine Abdichtungsbarriere 102 einen Teil des Kerntriebwerkgehäuses 11 von einem anderen abtrennt. Hier wird die Luft K von der ersten Einlassöffnung 1 in das Innere des Kerntriebwerkgehäuses 11 geleitet (siehe Fig. 5), um dort in einem hier nicht dargestellten Bereich einen Gegendruck aufzubauen.

Gleichzeitig wird die Luft K in Umfangsrichtung des Kerntriebwerkgehäuses 11 in einer Art Ringkanal 113 (hier gestrichelt eingezeichnet) verteilt, um Bereiche des Kerntriebwerkes 105 zu kühlen.

Der Bereich, der von der Luft K durchströmt ist, wird durch die Abdichtungsbarriere 102 von einem vorderen Teil (in Fig. 6 links) des Kerntriebwerkgehäuses 11 abgegrenzt, so dass die Luft K nicht ohne weiteres in diesen Bereich vordringen kann. Die Abdichtungsbarriere 102 weist hier zwei federnd elastische, S-förmig gebogene, umlaufende Bänder auf, die sich Innen und Außen an begrenzenden Flächen schmiegen, so dass eine Dichtwirkung eintritt. In anderen Ausführungsformen kann die Abdichtungsbarriere 102 anders geformt sein, z.B. in Form eines Faltenbalges.

In Fig. 7 ist eine weitere Ausführungsform dargestellt, bei der die eintretende Luft L durch einen Luftstrom M im Kerntriebwerkgehäuse 11 gesteuert wird. Der Luftstrom M kann z.B. aus einer zweiten Lufteinlassöffnung 3 stammen. Durch eine Leitvorrichtung 15 wird dieser Luftstrom M zur ersten Lufteinlassöffnung 1 geführt. Damit mischen sich die eintretende Luft L mit dem im Wesentlichen rechtwinklig dazu strömenden Luftstrom M. Dies führt zu einer Verwirbelung der kombinierten Strömung, insbesondere einer aerodynamischen Abdichtung, die zur Steuerung der Luftströmungen im Inneren des Kerntriebwerkgehäuses 11 eingesetzt werden kann. Ein Teil der einströmenden Luft L wird dann als Kühlluft K oder als Luft K zum Aufbau eines Gegendrucks in das Innere des Kerntriebwerkes 105 geführt.

Eine analoge Führung des Luftstroms M kann auch im vorderen Teil des Flugzeugtriebwerks 100 eingesetzt werden.

### Bezugszeichenliste

- 1: erste Lufteinlassöffnung
- 2: erste Verbindungsvorrichtung (z.B. Strebe)
- 3: zweite Lufteinlassöffnung
- 4: zweite Verbindungsvorrichtung

- 10: Nebenstromkanal
- 11: Kerntriebwerkgehäuse, innere Wandung Nebenstromkanal
- 12: äußere Wandung des Nebenstromkanals
- 13: Mantelgehäuse
- 14: Schraubenverbindung
- 15: Leitvorrichtung
- 16: Gehäuse für Verbindungsvorrichtung am Gehäuse des Kerntriebwerks

- 100: Flugzeugtriebwerk
- 101: Turbine
- 102: Abdichtungsbarriere
- 103: Wandung Kerntriebwerk
- 104: Kompressor
- 105: Kerntriebwerk
- 106: Befestigungsring
- 107: hinteres Turbinengehäuse
- 108: Kompressorwandung
- 109: Lagergehäuse
- 110: Öleinspritzung
- 111: Lager
- 113: Ringkanal

- L: einströmende Luft
- K: Luft, insbesondere Kühlluft, Luft zum Aufbau eines Gegendrucks
- M: Luftstrom

## Patentansprüche

1. Flugzeugtriebwerk mit einer Luftleitvorrichtung mit mindestens einer Verbindungvorrichtung (2) eines Kerntriebwerkgehäuses (11) mit einer äußeren Wandung eines Nebenstromkanals (10) des Flugzeugtriebwerkes, wobei mindestens eine erste Lufteinlassöffnung (1) für einströmende Luft (K) mit der Verbindungsvorrichtung (2) verbunden ist, mit mindestens eine Abdichtungsbarriere (102) zur räumlichen Trennung der durch die mindestens eine erste Lufteinlassöffnung (1) eingetretenen Luft (K) von anderen Bereichen des Kerntriebwerkes (105),
**dadurch gekennzeichnet, dass**
die mindestens eine Verbindungsvorrichtung (2) als Strebe ausgebildet ist und die mindestens eine erste Lufteinlassöffnung (1) in einem Gehäuse (16) an dem Kerntriebwerkgehäuse (11) angeordnet ist und das Gehäuse (16) eine Ausbuchtung des Kerntriebwerkgehäuses (11) ist.

2. Flugzeugtriebwerk nach Anspruch 1, **dadurch gekennzeichnet,** das die Strebe (2) radial oder tangential zum Kerntriebwerkgehäuse (11) angeordnet ist.

3. Flugzeugtriebwerk nach Anspruch 1 oder 2, **dadurch gekennzeichnet, dass** die mindestens eine erste Lufteinlassöffnung (1) für einströmende Luft (K) zur Kühlung mindestens eines Bereichs einer Wandung (103) einer Turbine (101), eines Teils der mindestens einen Verbindungsvorrichtung (2), einer elektrischen Vorrichtung und / oder eines Lagergehäuses (109) dient.

4. Flugzeugtriebwerk nach mindestens einem der vorhergehenden Ansprüche, **gekennzeichnet durch** ein Mittel zum Aufbau eines Gegendruckes mittels der einströmenden Luft (K) im Inneren des Flugzeugtriebwerks (100), insbesondere im Raumbereich von Lagern (111) der Turbine (101) und / oder des Kompressors (104).

5. Flugzeugtriebwerk nach mindestens einem der vorhergehenden Ansprüche, **dadurch gekennzeichnet, dass** die mindestens eine Abdichtungsbarriere (102) ein elastisches Band, einen umlaufenden Ring, eine elastische Membran und / oder einen Faltenbalg aufweist.

6. Flugzeugtriebwerk nach mindestens einem der vorhergehenden Ansprüche, **dadurch gekennzeichnet, dass** von der mindestens einen ersten Lufteinlassöffnung (1) stromaufwärts im Nebenstromkanal (10) mindestens eine zweite Lufteinlassöffnung (3) angeordnet ist.

7. Flugzeugtriebwerk nach mindestens einem der vorhergehenden Ansprüche, **gekennzeichnet durch** eine Luftführung der einströmenden Luft (K) durch die mindestens eine erste und / oder zweite Lufteinlassöffnung (1, 3) zur Unterdrückung einer Luftströmung aus einem inneren Bereich des Flugzeugtriebwerks (100) in den Nebenstromkanal (10).

8. Flugzeugtriebwerk nach mindestens einem der vorhergehenden Ansprüche, **gekennzeichnet durch** mindestens eine Leitvorrichtung (15) zur Führung eines Luftstroms (K, M) im Kerntriebwerkgehäuse (11) und / oder Gehäuse (16).

9. Flugzeugtriebwerk nach mindestens einem der vorhergehenden Ansprüche, **dadurch gekennzeichnet, dass** mindestens eine weitere Lufteinlassvorrichtung außerhalb einer Verbindungsvorrichtung (2, 4) vorgesehen ist.

## Claims

1. Aircraft engine having an air guiding mechanism with at least one connecting mechanism (2) of a core engine housing (11) with an outer wall of an auxiliary flow duct (10) of the aircraft engine, wherein at least one first air inlet opening (1) for inflowing air (K) is connected to the connecting mechanism (2), having at least one sealing barrier (102) for the spatial separation of the air (K) which entered through the at least one first air inlet opening (1) from other regions of the core engine (105), **characterized in that** the at least one connecting mechanism (2) is configured as a strut, and the at least one first air inlet opening (1) is arranged in a housing (16) on the core engine housing (11), and the housing (16) is a bulge of the core engine housing (11).

2. Aircraft engine according to Claim 1, **characterized in that** the strut (2) is arranged radially or tangentially with respect to the core engine housing (11) .

3. Aircraft engine according to Claim 1 or 2, **characterized in that** the at least one first air inlet opening (1) for inflowing air (K) serves to cool at least one region of a wall (103) of a turbine (101), a part of the at least one connecting mechanism (2), an electric device and/or a bearing housing (109).

4. Aircraft engine according to at least one of the preceding claims, **characterized by** a means for building up a counter-pressure by means of the inflowing air (K) in the interior of the aircraft engine (100), in particular in the spatial region of bearings (111) of the turbine (101) and/or of the compressor (104).

5. Aircraft engine according to at least one of the preceding claims, **characterized in that** the at least one sealing barrier (102) has an elastic band, a circumferential ring, an elastic membrane and/or a gaiter.

6. Aircraft engine according to at least one of the preceding claims, **characterized in that** at least one second air inlet opening (3) is arranged in the auxiliary flow duct (10) upstream of the at least one first air inlet opening (1).

7. Aircraft engine according to at least one of the preceding claims, **characterized by** an air guidance of the inflowing air (K) through the at least one first and/or second air inlet opening (1, 3) in order to suppress an air flow out of an inner region of the aircraft engine (100) into the auxiliary flow duct (10).

8. Aircraft engine according to at least one of the preceding claims, **characterized by** at least one guiding mechanism (15) for guiding an air flow (K, M) in the core engine housing (11) and/or housing (16).

9. Aircraft engine according to at least one of the preceding claims, **characterized in that** at least one further air inlet mechanism is provided outside a connecting mechanism (2, 4).

## Revendications

1. Moteur d'aéronef comprenant un dispositif de guidage d'air pourvu d'au moins un dispositif de connexion (2) d'un carter de moteur principal (11) avec une paroi extérieure d'un conduit de deuxième flux (10) du moteur d'aéronef, au moins une première ouverture d'entrée d'air (1) destinée à l'air entrant (K) étant reliée au dispositif de connexion (2), au moins une barrière d'étanchéité (102) destinée à séparer spatialement l'air (K), qui est entré par l'au moins une première ouverture d'entrée d'air (1), d'autres zones du moteur principal (105) ,
**caractérisé en ce que**
l'au moins un dispositif de connexion (2) est conçu comme une entretoise et l'au moins une première ouverture d'entrée d'air (1) est disposée dans un boîtier (16) au niveau du carter de moteur principal (11) et le boîtier (16) est un renflement du carter de moteur principal (11) .

2. Moteur d'aéronef selon la revendication 1,
**caractérisé en ce que** l'entretoise (2) est disposée radialement ou tangentiellement au carter de moteur principal (11).

3. Moteur d'aéronef selon la revendication 1 ou 2,
**caractérisé en ce que** l'au moins une première ouverture d'entrée d'air (1) destinée à l'air entrant (K) sert à refroidir au moins une zone d'une paroi (103) d'une turbine (101), une partie de l'au moins un dispositif de connexion (2), un dispositif électrique et/ou un logement de palier (109).

4. Moteur d'aéronef selon l'une au moins des revendications précédentes, **caractérisé par** un moyen pour créer une contre-pression au moyen de l'air entrant (K) à l'intérieur du moteur d'aéronef (100), notamment dans la zone spatiale des paliers (111) de la turbine (101) et/ou du compresseur (104).

5. Moteur d'aéronef selon l'une au moins des revendications précédentes, **caractérisé en ce que** l'au moins une barrière d'étanchéité (102) comporte une bande élastique, un anneau circonférentiel, une membrane élastique et/ou un soufflet.

6. Moteur d'aéronef selon l'une au moins des revendications précédentes, **caractérisé en ce qu'**au moins une deuxième ouverture d'entrée d'air (3) est disposée dans le conduit de deuxième flux (10) en amont de l'au moins une première ouverture d'entrée d'air (1).

7. Moteur d'aéronef selon l'une au moins des revendications précédentes, **caractérisé par** un conduit de l'air entrant (K) à travers l'au moins une première et/ou deuxième ouverture d'entrée d'air (1, 3) pour supprimer un flux d'air allant d'une zone intérieure du moteur d'avion (100) jusque dans le conduit de deuxième flux (10) .

8. Moteur d'aéronef selon l'une au moins des revendications précédentes, **caractérisé par** au moins un dispositif de guidage (15) destiné à guider un flux d'air (K, M) dans le carter de moteur principal (11) et/ou le boitier (16).

9. Moteur d'aéronef selon l'une au moins des revendications précédentes, **caractérisé en ce qu'**au moins un autre dispositif d'entrée d'air est prévu à l'extérieur d'un dispositif de connexion (2, 4).
